# EUROPEAN PATENT SPECIFICATION

(11) **EP 2 453 154 B1**
(45) Date of publication and mention of the grant of the patent: **13.11.2013**
(21) Application number: 10191354.9
(22) Date of filing: 16.11.2010
(51) Int. Cl.: F16K 31/04, F16K 1/20, F16K 31/52

(54) **Arrangement for the transmission of a flowable medium**
Anordnung zur Übertragung eines fließfähigen Mediums
Agencement pour la transmission d'un support fluide

(43) Date of publication of application: 16.05.2012
(73) Proprietor: Itron GmbH, 76185 Karlsruhe (DE)
(72) Inventor: Schuhbaum, Heinz, 76889, BARBELROTH (DE)
(74) Representative: Howson, Richard G.B.

(56) References cited:
- EP-A1- 0 680 839
- EP-A1- 0 780 607
- WO-A1-2009/074431
- GB-A- 856 212

## Description

The invention is concerned with an arrangement for the transport of a flowable pressurized medium, which comprises a pipe for guiding the medium and an adjusting mechanism with a valve disk and a drive, by which the valve disk can be moved into a locking position, in which the clear cross-section of the pipe is closed, and into an open position (WO 2009/074431 A1).

Such an arrangement is known since long time. It can be used in principle for the transport of any flowable medium, which is liquid or gaseous. Of an essential value such an arrangement is for the transport of gas. This special use is discussed hereinafter - standing in also for other media. The arrangement inter alia is mounted, when the gas e. g. is used for heating purposes. The gas is delivered as a supporter of energy from the producer or supplier of the gas, a gas plant, or from a reservoir to users via pipes. Users can be e. g. companies, hospitals, other public institutions and private households. The consumption of gas and the depending remuneration which has to be paid to the supplier of the gas, is metered respectively with at least one gasmeter, that is installed at the user, which e. g. is connected to a gas pipe.

It can happen that the flow route of the gas must be interrupted and opened again by an external action which can not be influenced by the user. Reasons for such an action can be that the user has not paid for the gas used by him or that a prepaid amount of money is used up or that manipulations are done at the gasmeter or the complete gas installation.

From the WO 2009/074431 A1 which is mentioned in the beginning, an arrangement is known, by use of which the flow route of gas within a pipe can be closed and opened again. The arrangement has a valve disk which fastened to the end of a shaft, which is positioned within the pipe and which can be moved by a drive that is connected to the shaft. In the closed position the valve disk closes an opening which is provided in the wall of the pipe, that is closed at its front face. The opening leads into a casing, by which the flow route of the gas is continued when the opening is not closed. This document is concerned in the main with additional elements of the valve disk or the adjusting mechanism, which are needed for a pressure relief, when the opening shall be opened again. All these elements also are positioned within the pipe. Thus the flow route of the gas is restricted by the valve disk and the corresponding adjusting mechanism.

It is the task of the invention, to improve the arrangement mentioned above such that the gas transporting pipe can be closed and opened in a simpler manner.

According to the invention this task is solved by the features,
- that the valve disk is positioned at one end of a wire-like swing lever, which is fixed on a plate-like support in a swingable manner,
- that the other end of the swing lever is coupled to an electrical motor, which also is fastened to the support, and
- that the support in mounting position is connected with hermetically seal to the pipe such, that the valve disk projects into the same.

This arrangement which comprises in the main the plate-like support and the swingable mounted valve disk can be installed into or to the pipe. The valve disk furthermore can be installed with the support such that it closes the pipe itself after action of the electrical motor. For this purpose it only is necessary to install the support, which carries the valve disk being mounted at the end of the swing lever, into the pipe or in an opening of the same which after mounting is sealed hermetically by the support. The flow route of the gas is not changed by the support and especially not restricted. Accordingly it is not necessary to provide an additional opening in the wall of the pipe which is to be closed and opened again by the valve disk which also needs a continuation of the flow route of the gas. As the valve disk during its operation makes a swinging movement it can be placed with advantage within the pipe such that it does not disturbed the flow of the gas but even supports the same with a corresponding sloping position, when the support of the valve disk is mounted at a position of the pipe, in which the same e.g. is bended about 90°.

With special advantage the arrangement is installed within the housing of a gasmeter in a pipe which runs through the same. The dimensions of the support and the valve disk can be adapted easily to the dimensions of the pipe and be made especially very small. The dimensions of the housing of the gasmeter and of its components must no be changed.

The swing lever in a preferred embodiment has the form of a "U" with its ends being bended to the side. It is fastened to the support in a swingable manner around the axis of one of its thighs.

For the operation of the swing lever by the electrical motor one bended end of the same can project into a cam disk, which can rotate around its axis and is driven by the electrical motor and which has a curved track, in which the end of the swing lever slides, thereby effecting the swing movement of the valve disk.

Between the electrical motor and the cam disk with advantage a gear unit comprising gear wheels can be mounted by which during operation of the electrical motor the cam disk is rotated around its axis. The cam disk for this purpose bears a gear rim at its peripheral area which meshes with the corresponding gear wheel of the gear unit. By this intermediately installed gear unit the pressure which is fed to the valve disk during the closing operation is increased essentially.

The valve disk in principle can be moved back into its open position by the electrical motor. For this action pre-ventilation may be needed. For this purpose with advantage a sealing element can be installed in the center of the valve disk into which the swing lever projects with its one end. The sealing element is moveable between two end positions in the direction of the middle axis of the valve disk within the same. In one of the end positions the valve disk is sealed hermetically by the sealing element, while in its other endposition a slit-like opening is released. The sealing element preferably is protected against rotation within the valve disk.

The electrical motor can be arranged in an electrical circuit with a switch which is actuated by a signal to switch of or turn out the electrical motor. The switch with advantage can be an electronically switch, e. g. a transistor. The signal for the electrical motor e. g. can be triggered, when a prepaid amount of money is consumed, when a corresponding order is given by a switchboard or when an unauthorized person manipulates the complete gas installation, especially the gasmeter. In the closed position of the valve disk the pipe is sealed hermetically. The gas then is blocked for the user. The valve disk in the closed position in addition is hold in this position by the pressure of the gas within the pipe.

Preferred embodiments of the subject of the invention are shown in the drawings.

The drawings show:
Fig. 1 schematically a part of a gas installation which is mounted at the building of a user.
Fig. 2 the arrangement of the invention in its closed position, also schematically, in a very simple manner.
Fig. 3 the arrangement analogues to Fig. 2 in its open position.
Fig. 4 a side view of the arrangement very schematically.
Fig. 5 a cut through Fig. 4 along the line V-V.
Fig. 6 a side view of the arrangement in a more detailed depiction.
Fig. 7 a top view to a support of the arrangement on its side which is opposite to the valve disk.
Fig. 8 the arrangement itself in its open position.

The arrangement of the invention can, as already mentioned, mounted into a gas pipe at any place in the area of a user. With advantage it is mounted within the housing of a gasmeter which is installed in a building of the user, because then only minor changes of the installation are needed and because at this place normally electrical current for the electrical motor is available. In the following this installation place is considered standing also for the other possible places.

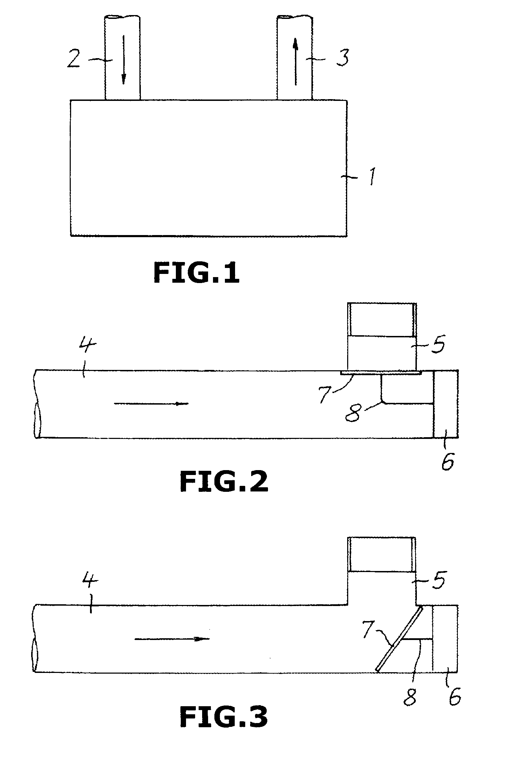

Fig. 1 shows a gasmeter 1 which e. g. is mounted in the building of a user. Gas is fed to the gasmeter through a supply-gas pipe 2. An internal gas pipe 3 starting from the gasmeter 1 is part of the internal pipe system of the user. It leads with corresponding distribution to different consumption places of gas. The supply-gas pipe 2 and the internal gas pipe 3 are connected within the housing of the gas meter 1 by a pipe 4 according to Figs. 2 and 3. The pipe 4 is - according to the shown embodiment - bended at its one end within the housing of the gasmeter 1 about an angle of 90°. A connecting piece 5 which is formed by the bending protrudes from the housing of the gas meter 1. It serves for the connection of an extending pipe, e. g. the internal gas pipe 3.

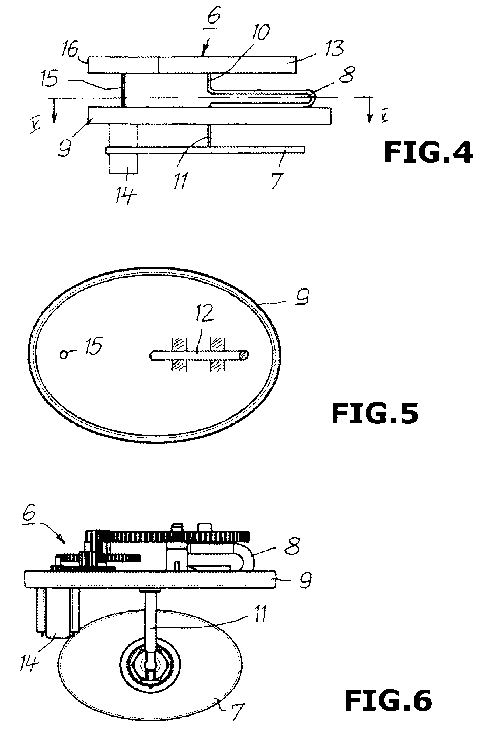

In the area of the bending of the pipe 4 a device 6 for the closing and opening of the same is mounted within or at the same in a hermetically sealed manner. The construction of the device 6 is to be seen from Figs. 4 to 8. The device comprises a swingable fixed valve disk 7, which can be swivelled by use of a swing lever 8 into a closed position according to Fig. 2 or in an open position according to Fig. 3. In the closed position of the valve disk 7 the pipe 4 is closed with hermetical seal. In the open position the gas can flow through the pipe 4 without hindrance.

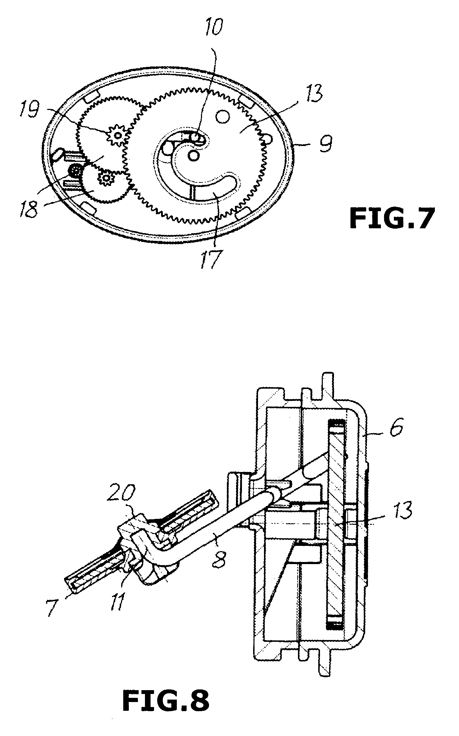

The device 6 has according to Figs. 4 and 5 a plate-like support 9, the outer contour of which is adapted to the cross-section of the pipe 4. In the shown embodiment the support 9 is oval. It can have any other form of its contour, e. g. circular. That is true also for the valve disk 7 which is shown in Fig. 6 and 8 more detailed. The support 9 has at its peripheral area with advantage a sealing element all around.

On the support 9 the wire-like swing lever 8 is fixed swingable. It can with advantage have the form of a "U", as to be seen from Fig. 4, with two bended ends 10 and 11. The swing lever 8 is fastened to the support 9 with one of its thighs 12 of the U-like body and swingable around the axis of the same, as to be seen from Fig. 5. The end 10 of the swing lever 8 projects into a cam disk 13 which is rotatable around its axis. The construction of the cam disk 13 is shown more detailed in Fig. 7. The end 11 of the swing lever 8 projects into the valve disk 7.

Also fastened to the support 8 is an electrical motor 14 which meshes with the cam disc 13 by a wheel 16 that is fastened to the end of its shaft 15.

The cam disc 13 has curved track 17, into which the swing lever 8 projects with its end 10. This end 10 of the swing lever 8 is moved along the curved track 17 when the cam disk 13 is rotated.

In a preferred embodiment a gear unit, comprising gear wheels 18 and 19, is positioned between the electrical motor 14 and the cam disk 13. The gear wheels 18 und 19 are fixes to the support 9 rotatable around their axis. The cam disk 13 has a gear rim at its peripheral area for meshing with the gear wheel 19. By the gear unit the strength is increased which is fed to the valve disk 7 by the swing lever 8 during the closing process. By the combination of gear unit and curved track 17 of the cam disk 13, by which the swing lever 8 is guided, the pressure which is fed to the valve disk 7 in its closed position is maintained with a self-locking effect even when the electrical motor 14 does no longer presses against it with the end of the swing lever 8. The arrangement of the invention e. g. works as follows:
In case that the supply with gas for a user shall be interrupted, because e. g. the amount of a prepaid card is consumed or because of any other of the reasons mentioned above the electrical motor 14 is activated, e. g. by a signal from an electronically circuit. The electrical motor 14 then rotates the cam disk 13 around its axis. By this movement the swing lever 8 also is moved along the curved track 17 and swings the valve disc 7 into its closed position according to Fig. 2. The pipe 4 then is closed hermetically sealed such that gas can no more enter the internal pipes of the user. To improve the sealing a sealing element can be mounted to the peripheral area of the valve disk 7, preferably a sealing strip.

When the "disturbance" which has caused the closing of the pipe 4, is removed the valve disk 7 can be opened by the electrical motor 14 with movement into the position of Fig. 3 under normal conditions with pressures e. g. up to 22 mbar.

But in case of a disturbance at a pre mounted upstream control valve also pressures between e. g. 150 mbar and 300 mbar can occur within the supply-gas pipe 2, which acts on the valve disk 7 such that for an opening of the same a pre-ventilation is needed. Such a pre-ventilation, by which the pressure difference on the two opposing sides of the valve disk 7 can be decreased such that the valve disk 7 can be opened by the electrical motor 14, can be e. g. a ventilation valve which is mounted to the valve disc 7.

Such a ventilation valve can be with advantage a sealing element 20 which is mounted in the center of the valve disk 7 and which is moveable between two end positions in the direction of the middle axis of the valve disk 7. The swing lever 8 projects into the sealing element 20 with its end 11. The corresponding opening of the valve disk 7 is closed in its closed position hermetically sealing by the sealing element 20, because the swing lever 8 which is moved by the electrical motor 14 is pressed against or into the same. The pressure is removed, when the electrical motor 14 for the opening of the pipe 4 rotates in the opposite direction thereby lifting the swing valve 8 from the sealing element 20. The sealing element 20 then is moved into its second end position out of the valve disk 7 such that a slit-like opening occurs which allows for the desired pressure balance. As soon as the pressure difference is sufficient low, the electrical motor 14 can move the valve disk 7 into its open position.

The sealing element 20 can have with advantage a hexagonal cross-section, to guarantee that it can not be rotated within the opening of the valve disk 7 having a corresponding internal cross-section. This also guarantees that the valve disk 7 can not rotate on the swing lever 8 relative to the same. That is necessary when e. g. the valve disk 7 has an oval form, according to the embodiments of the drawings.

## Claims

1. Arrangement for the transport of a flowable pressurized medium, which comprises a pipe for guiding the medium and an adjusting mechanism with a valve disk (7) and a drive, by which the valve disk can be moved into a locking position, in which the clear cross-section of the pipe is closed, and into an open position, **characterized in**
- **that** the valve disk (7) is positioned at one end of a wire like swing lever (8), which is fixed on a plate-like support (9) in a swingable manner,
- **that** the other end of the swing lever (8) is coupled to an electrical motor (14), which also is fastened to the support (9), and
- **that** the support (9) in mounting position is connected with hermetically seal to the pipe (4) such that the valve disk (7) projects into the same.

2. Arrangement according to claim 1, **characterized in that** the swing lever (8) is bended into a U-form and fixed to the support (9) with one of its thighs (12), around the axis of which the swing lever (8) is swingable.

3. Arrangement according to claim 1 or 2, **characterized in that** the electrical motor (14) is coupled with a cam disk (13) being rotatable around its axis by the electrical motor (14) and having a curved track (17) into which the swing lever (8) projects with one of its ends.

4. Arrangement according to claim 3, **characterized in that** a gear unit comprising gear wheels (18,19) is positioned between the electrical motor (14) and the cam disk (13) which bears a gear rim at its peripheral area.

5. Arrangement according to one of the claims 1 to 4, **characterized in that** the valve disk (7) has a sealing element at its peripheral area, preferably a sealing strip.

6. Arrangement according to one of the claims 1 to 5, **characterized in**
- **that** a sealing element (20) is positioned in the center of the valve disk (7) and is moveable between two endpositions in the direction of the middle axis of the valve disk (7), into which the swing lever (8) penetrates with its corresponding end, and
- **that** in one of the endpositions of the sealing element (20) the valve disk (7) is closed hermetically sealed, while in the other endposition of the same a slit- like throughhole is realized.

7. Arrangement according to claim 6, **characterized in that** the sealing element (20) is protected within the valve disk (7) against rotation around the middle axis of the same.

## Patentansprüche

1. Anordnung für den Transport eines fließfähigen unter Druck stehenden Mediums, die ein Rohr zum Leiten des Mediums und einen Einstellmechanismus mit einem Ventilteller (7) und einem Antrieb umfasst, durch den der Ventilteller in eine Absperrposition bewegt werden kann, in welcher der freie Querschnitt des Rohrs geschlossen ist, und in eine offene Position, **dadurch gekennzeichnet,**
- **dass** der Ventilteller (7) an einem Ende eines drahtartigen Schwinghebels (8) positioniert ist, der auf schwingbare Art auf einem plattenartigen Stützelement (9) befestigt ist,
- **dass** das andere Ende des Schwinghebels (8) an einen Elektromotor (14) gekoppelt ist, der ebenfalls am Stützelement (9) befestigt ist, und
- **dass** das Stützelement (9) in der Montageposition mit einer hermetischen Abdichtung mit dem Rohr (4) verbunden ist, sodass der Ventilteller (7) in dasselbe vorsteht.

2. Anordnung nach Anspruch 1, **dadurch gekennzeichnet, dass** der Schwinghebel (8) in eine U-Form gebogen ist und mit einem seiner Schenkel (12), um dessen Achse der Schwinghebel (8) schwingbar ist, am Stützelement (9) befestigt ist.

3. Anordnung nach Anspruch 1 oder 2, **dadurch gekennzeichnet, dass** der Elektromotor (14) mit einer Nockenscheibe (13) gekoppelt ist, die durch den Elektromotor (14) um ihre Achse drehbar ist und eine gekrümmte Spur (17) hat, in die der Schwinghebel (8) mit einem seiner Enden vorsteht.

4. Anordnung nach Anspruch 3, **dadurch gekennzeichnet, dass** eine Getriebeeinheit, die Zahnräder (18, 19) aufweist, zwischen dem Elektromotor (14) und der Nockenscheibe (13) positioniert ist, die einen Zahnkranz an ihrem peripheren Bereich hat.

5. Anordnung nach einem der Ansprüche 1 bis 4, **dadurch gekennzeichnet, dass** der Ventilteller (7) ein Abdichtelement an seinem peripheren Bereich hat, vorzugsweise ein Abdichtband.

6. Anordnung nach einem der Ansprüche 1 bis 5, **dadurch gekennzeichnet,**
- **dass** ein Abdichtelement (20) im Zentrum des Ventiltellers (7) positioniert ist und zwischen zwei Endpositionen in die Richtung der Mittelachse des Ventiltellers (7) bewegbar ist, in die der Schwinghebel (8) mit seinem entsprechenden Ende eindringt, und
- **dass** der Ventilteller (7) in einer der Endpositionen des Abdichtelements (20) hermetisch abgedichtet ist, während in der anderen Endposition desselben eine schlitzartige Durchgangsöffnung realisiert ist.

7. Anordnung nach Anspruch 6, **dadurch gekennzeichnet, dass** das Abdichtelement (20) im Ventilteller (7) vor Rotation um die Mittelachse desselben geschützt ist.

## Revendications

1. Agencement pour le transport d'un milieu fluide sous pression, qui comprend un conduit pour guider le milieu et un mécanisme de réglage avec un disque de vanne (7) et un entraînement, par lequel le disque de vanne peut être déplacé dans une position de verrouillage, dans laquelle la coupe transversale dégagée du conduit est fermée, et dans une position ouverte, **caractérisé en ce que**
- le disque de vanne (7) est positionné à une extrémité d'un levier de pivotement (8), qui est fixé sur un support de type plaque (9) d'une manière pivotante,
- l'autre extrémité du levier de pivotement (8) est couplée à un moteur électrique (14), qui est également fixé au support (9), et
- le support (9) en position de montage est relié avec un joint hermétique au conduit (4) de telle sorte que le disque de vanne (7) fait saillie dans celui-ci.

2. Agencement selon la revendication 1, **caractérisé en ce que** le levier de pivotement (8) est cintré en une forme de U et fixé au support (9) avec une de ses pattes (12), autour de l'axe autour duquel le levier de pivotement (8) peut pivoter.

3. Agencement selon la revendication 1 ou 2, **caractérisé en ce que** le moteur électrique (14) est couplé à un disque de came (13) pouvant tourner autour de son axe par le moteur électrique (14) et ayant une piste courbée (17) dans laquelle le levier de pivotement (8) fait saillie avec une de ses extrémités.

4. Agencement selon la revendication 3, **caractérisé en ce qu'**un groupe d'engrenages comprenant des roues dentées (18,19) est positionné entre le moteur électrique (14) et le disque de came (13) qui porte un rebord denté au niveau de sa zone périphérique.

5. Agencement selon l'une des revendications 1 à 4, **caractérisé en ce que** le disque de vanne (7) a un élément de scellage au niveau de sa zone périphérique, de préférence une bande de scellage.

6. Agencement selon l'une des revendications 1 à 5, **caractérisé en ce que**
- un élément de scellage (20) est positionné au centre du disque de vanne (7) et peut se mouvoir entre deux positions finales dans la direction de l'axe central du disque de vanne (7), dans lequel le levier de pivotement (8) pénètre avec son extrémité correspondante, et
- dans une des positions finales de l'élément de scellage (20), le disque de vanne (7) est fermé hermétiquement scellé, alors que dans l'autre position finale de celui-ci, un orifice traversant de type fente est réalisé.

7. Agencement selon la revendication 6, **caractérisé en ce que** l'élément de scellage (20) est protégé au sein du disque de vanne (7) d'une rotation autour de l'axe central de celui-ci.
